# EUROPEAN PATENT APPLICATION

(11) **EP 1 380 911 A1**
(43) Date of publication of application: **14.01.2004**
(21) Application number: 02077858.5
(22) Date of filing: 12.07.2002
(51) Int. Cl.: G05B 23/02, G06F 17/50, G05B 17/02

(54) **System for gaining access to information relating to industrial sites with a substantial complexity**

(71) Applicant: Inter-Technology Crystal N.V., Curacao (AN)
(72) Inventor: Jansen, Robert Theodorus Louis Maria, Curacao (AN)
(74) Representative: Eveleens Maarse, Pieter

(57) **Abstract**

The invention relates to a system for access, exchange, analyses and design of information relating to industrial plants having a substantial complexity like petrochemical sites or production facilities for semiconductors, the system comprising at least a set of mutually connected computers containing the information and at least a client computer functioning as user station to enable the user to access the information to the information, wherein the system is adapted to create a virtual reality for the user on the client computer representing the premisses of said industrial plant and that access to the information is obtained through objects in said virtual reality which bear a relation to the information concerned.

The virtual reality aspect has the substantial advantage that a person looking for information is automatically urged to the location where he or she would expect the required information to be in real life, thus shortening the look up time.

## Description

The invention relates to industrial plants with a substantial complexity like petrochemical sites and production facilities for semiconductors.

During the life cycle of such an industrial plant there are numerous situations wherein persons require information relating to the plant and the systems present in said plant. These situations may arise during planning, building, refurbishing, operating or demolishing the industrial plant, to name only some possibilities.

The information may concern general or detailed information, not only about the industrial plant itself but also about the processes which are conducted in the plant, the products made, the production equipment and other technical installations, the people working at the plant, etc.

Although this information can be managed on numerous other ways, it is usually difficult and often time consuming to obtain or manipulate the required information, especially when the site has a complex nature. This complexity expresses itself not only in the properties of the actual production facilities and asscociated systems but also in the complexity of the information systems associated to it.

To facilitate an easier way of managing this information in terms of access, exchange, analysis and design, the invention provides a system for access, exchange, analyses and design relating to industrial plants having a substantial complexity like petrochemical sites or production facilities for semiconductors, the system comprising;
- at least a set of mutually connected computers containing the information; and
- at least a client computer functioning as user station to enable the user to access the information to the information,
wherein the system is adapted to create a virtual reality for the user on the client computer representing the premisses of said industrial plant and that access to the information is obtained through objects in said virtual reality which bear a relation to the information concerned.

The application of this system requires that all information to be accessed is brought into electronic form. This may appear a substantial task now, but presently an increasing amount of information is handled in electronic form so that this disadvantage is decreasing in time.

The virtual reality aspect has the substantial advantage that a person looking for information is automatically urged to the location where he or she would expect the required information to be in real life, thus shortening the look up time.

Indeed virtual reality is known in computer environments, but mostly in the field of electronic games and scientific applications, and less in the field of information management, training and design.

According to a first preferred embodiment at least one of the set of computers is adapted to function as a server and that the client computer is remote from said server computer.

This feature allows the user to obtain the information from a remote location. This is of substantial importance as suppliers, contractors or clients are - especially in the fields of complex processing equipment, advanced manufacturing facilities and their technical installations - located all over the world. The remote accessibility of information leads to substantial savings in travel and communication costs.

Another preferred embodiment provides the feature the client computer and the server computer are connected through the internet.

This avoids the use of dedicated lines, and makes the information readily available for everyone, albeit under protection of a password or similar features so that only authorized users may access the information.

A third embodiment provides the feature that the system is the system comprises more than one client computer, that the users of each client computer are represented by the figure of a human being and that the users communicate and exchange information by transfer of data.

This feature enhances the effects of virtual reality, and makes it easier for the user to play his or her role in the act of management, analysis and exchange of information.

This invention is fit for application in different fields within the scope of the invention as disclosed above. Until now five fields of application have appeared to the inventor and those fields will be described below.
The first field is the general field of information management.

Therefore the invention provides the feature that in the virtual reality representation information access points, like a library, a reception desk, are represented and the information access points give access to information of the kind which is obtainable at the information access points in real life which are represented.

The extension of the virtual reality to those objects normally present in company facilities of any size enhances not only the effect of the virtual reality but allows an easier retrieval of the required information.

The aspects mentioned above allow for the retrieval and management of information by a user without intervention of another human being. This is only a limited representation of the acts taking place at a production facility, or even at the premises of a company. In those acts interaction between humans plays an important rule, also in the field of access to and management of information.

To take account of this effect comprises more than one client computer, wherein the users of each client computer are represented by the figure of a human being and that the users communicate and exchange information by transfer of data.

This aspect allows the different persons playing a role in the virtual reality to exchange information.

Just as in real life such sessions between humans require appointments to be made.

To allow this the system comprises means to make appointments between users.
The second field is the field of database information.

The system is adapted to access a database containing information relating to an object in the industrial site when the person in the virtual reality representation of said site clicks on the object.

Again this allows an easier intuitive method of access to the information.

Training is an important aspect in the operation of complex industrial plants. Usually large sums of money are spent to train people who are to fulfill duties in such a plant, especially for operation and maintenance of technical installations.

The third field of the invention provides for training without involving the cost of trainers and of the provision of costly equipment.

The invention provides in a virtual reality representation allowing the user objects in said industrial site to take apart to pieces and to reassemble to simulate maintenance and repair actions.

Especially in production facilities with complex conduit patterns the design of the conduits is complex, not only as a consequence of the large number of conduits and interconnects but also as the configuration of the conduits is three-dimensional and is in normal drawings only represented in two dimensions.

The invention provides a solution to this problem in that the system is adapted to enable a user to design and draw conduits between the objects in the industrial site wherein the conduits are represented in the virtual reality representation of the industrial site.

A similar problem appears in the design of the facilities of the complex as such, that is the location of the different objects such as systems and technical installations in the whole complex including their mutual conduits.

According to another field the the system is adapted to enable the user to design the objects of the industrial site and their interrelations, wherein during the design procedure the designed objects are represented in the virtual reality representation.

Subsequently the fields of the application will be described with the help of the accompanying drawings, in which:

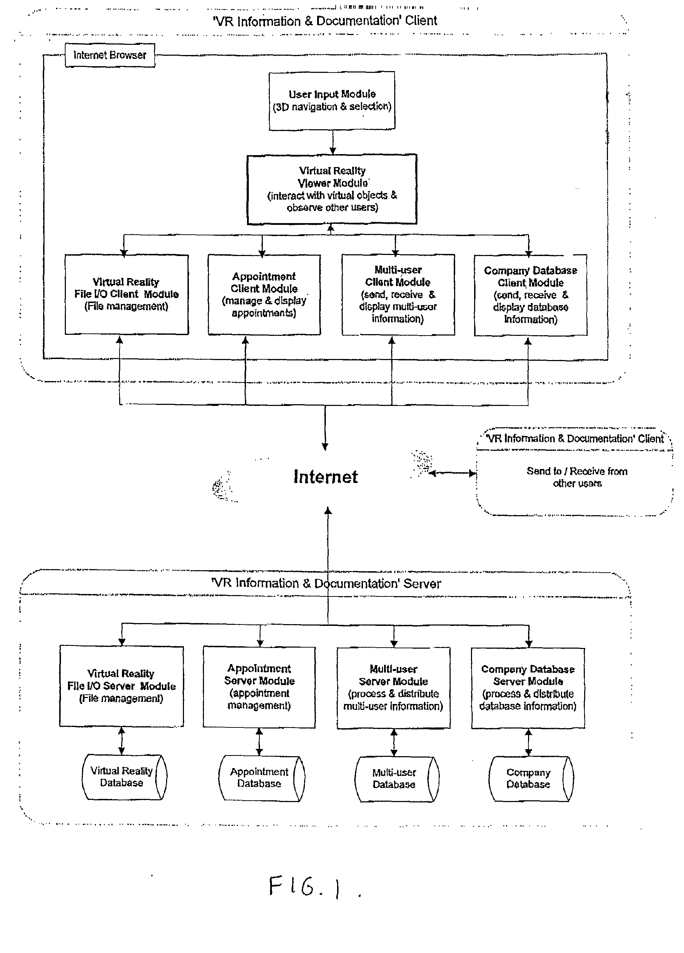

fig.1 is a diagram to elucidate the first field of the invention, that is the aspect of information and documentation;

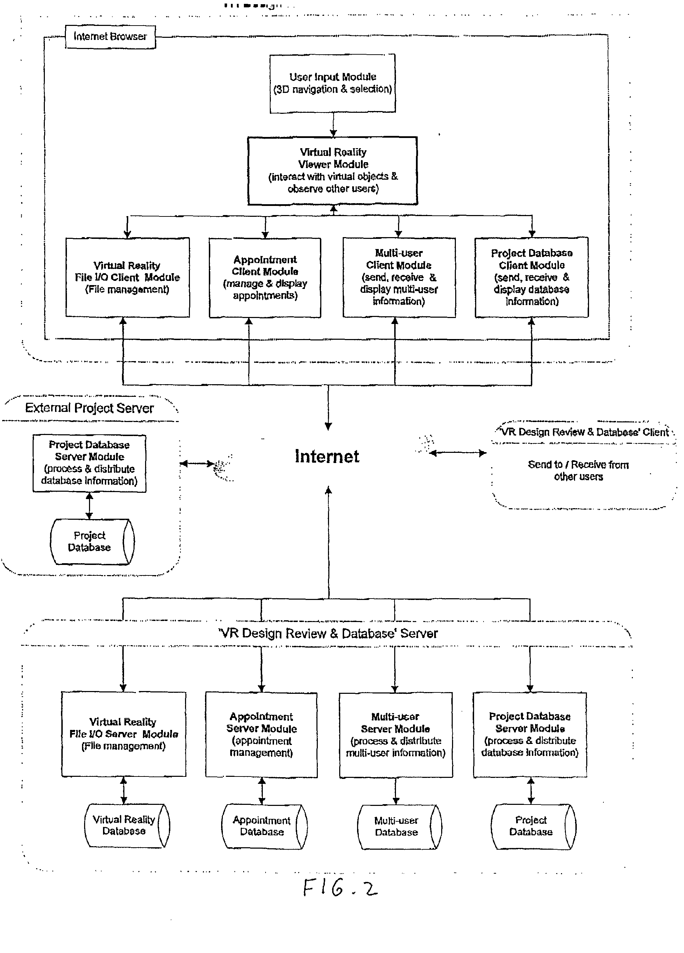

fig.2 is a diagram to elucidate the second field of the invention, that is the aspect of design review and database management;

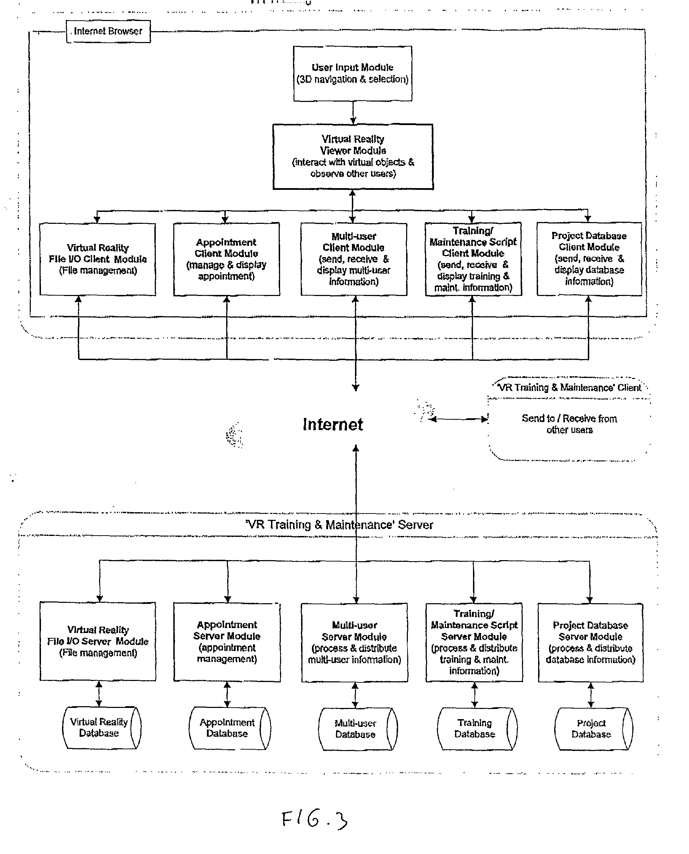

fig.3 is a diagram to elucidate the third field of the invention, that is the aspect of training and maintenance;

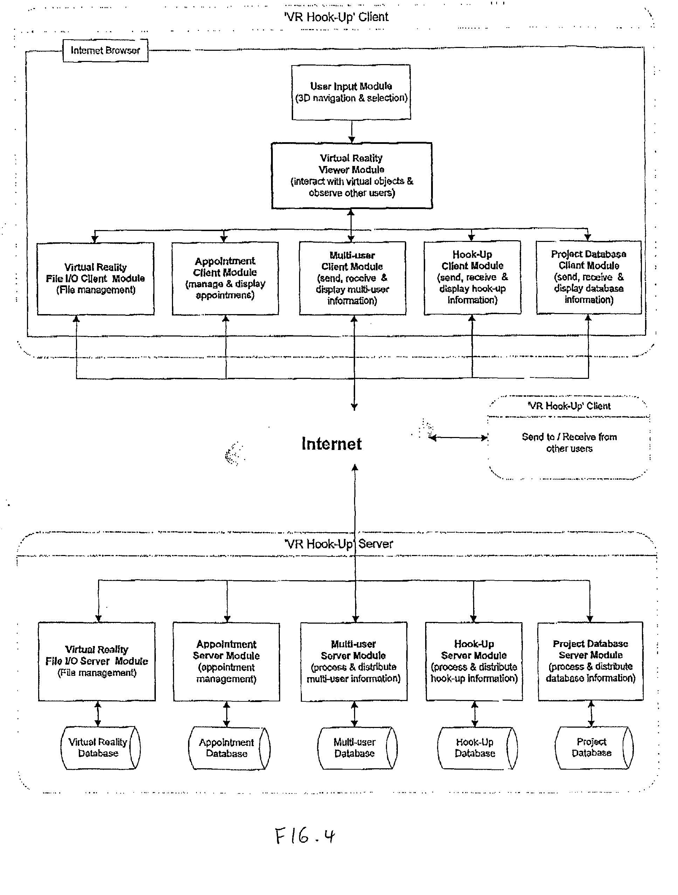

fig.4 is a diagram to elucidate the fourth field of the invention, that is the aspect of hook-up; and

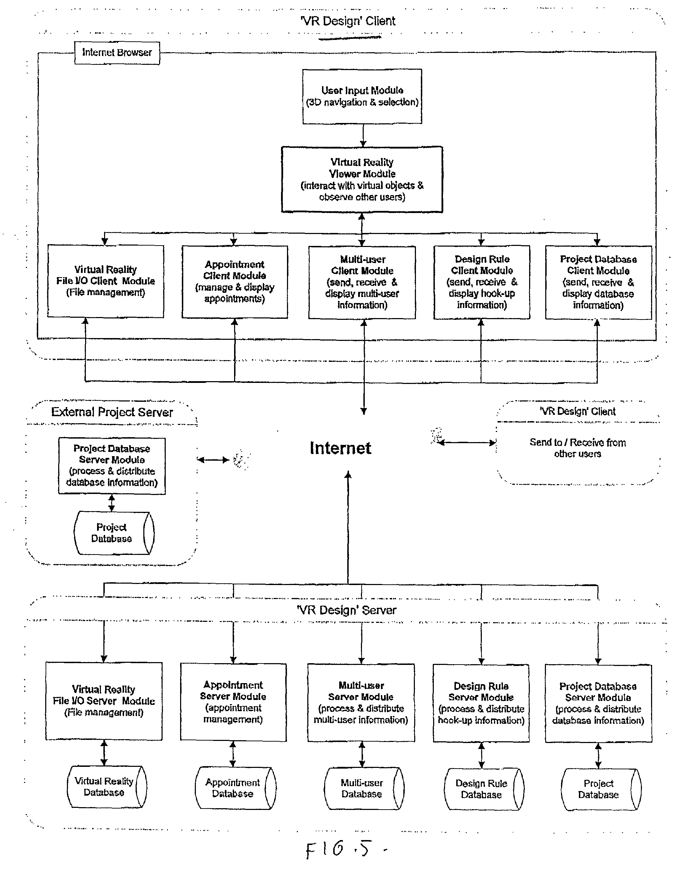

fig.5 is a diagram to elucidate the fifth field of the invention, that is the aspect of design facilities.

### First field: web-meeting, information and documentation management

This field of the invention deploys an interactive application for web-based meetings, exchange of information and documentation management that is modeled around a virtual reality representation of the physical environment in which a user is operating. Examples of this would be a virtual representation of the user's own offices or another location at which users may organize meetings. This field of the invention allows multiple web-based users to identify themselves as a visitor to such virtual place, allowing them to interactively navigate through virtual space, participate in web-meetings, access a variety of information sources, such as documents, information archives, bulletin boards, etc. These combined capabilities in virtual space provide a user with a highly realistic experience, creating a visual dynamic interaction "as if" these activities take place in the reality of the intended physical location.

The application comprises a photo-realistic virtual reality model that represents the physical location to be visited. Authorized visitors (from now on to be identified as "users"), can log into the application from a web-based client station from any location around the globe. Each user is assigned a nametag and is visually coded, usually in terms of a virtual representation of a human being. The user is able to: (1) observe its virtual environment, (2) interactively navigate through it, (3) observe the other users that have logged into the application, (4) to communicate and exchange information. This exchange of information with other users takes place on the basis of web-based transfer of text, data, voice and video.

The virtual reality application incorporates a number of means for management of web- meetings. They incorporate:
1. A user is provided with an up-to-date overview of the other users that are logged into the application and can set its own authorization rules for interaction and information exchange with each other user individually.
2. A user can manage its appointments by identifying when and where to meet in virtual space,
3. A user can make a reservation for a virtual meeting room and identify the individual meeting participants. Only these participants will be able to access the meeting room. Information exchange is constrained to these users only, i.e. any other visitor will be exempt.

The virtual reality application incorporates so called "information access points" (IAP). An IAP is a virtually modeled dedicated information access & management entity, serving the user in a specific information gathering activity. An IAP is visually coded within the virtual reality model, e.g. by the representation of a document room, computer monitor, filing cabinet, etc., and is positioned at an appropriate intuitive physical location.

IAP's provide dedicated data or information management services, such as access to: (1) a document center, (2) question & answer center, (2) news group center.

A well chosen integration of function and location of IAP's in the virtual reality, provides the web-based users with an intuitive interface to a variety of information sources, mimicking the physical presence of those sources at the corresponding physical location. Examples would be: an IAP for general company information that may be positioned on the desk of the central reception, an IAP for the documents are located in the central documentation room, an IAP for a certain set of technical installations that is positioned next to those systems.

The software design of the application is based on a client-server architecture, deploying a web-based interface between client and server. The server part of the software application manages the digital model, provides a dedicated number of navigation, inspection and analysis functions, incorporates a database or provides an access channel to database information and incorporates an interface for the web-based client software. The client part of the application provides the user with display, inspection, analysis, reporting and manipulation capabilities, deploying a graphical direct-manipulation interface.

The client-server software architecture is designed to make efficient use of internet traffic, maximize utilization of server capability and optimizing the refresh rate of the VR representation at the client interface, in order to provide a near real-time interaction of the user with the virtual reality.

Additional features of the application are:
1. A user can consult a topological layout of the facility that contains the current location of all users. It can use the topology to identify the location it wants to go to, providing an efficient navigation aid; and
2. Users can be assigned an authorization level to blocks their entrance to certain restricted areas in the location of their visit. This will constrain users with limited authorization to access classified information.

### Second field: design review and database management

This part of the invention deploys an interactive application for web-based designs review, inspection and analysis of a facility, such as an industrial plant, with associated management of documentation databases. The application is based on a virtual reality representation of the total plant. The innovation allows multiple web-based users to identify themselves as a visitor to such virtual place, allowing them to interactively navigate through virtual space, communicate amongst each other in a variety of ways, access information about the objects in the virtual environment and interact with associated databases, such as for documents, drawings, etc. These combined capabilities in virtual space provide a user with a highly realistic experience for execution of design reviews, inspections and database management, creating a visual dynamic interaction "as if" these activities take place in the reality of the physical location.

The application comprises a photo-realistic virtual reality representation for site, buildings, process utilities, production tools, automation systems, operators, etc, where important dynamic activities, such as machine operations or the transport of semi-finished goods between stations, are represented by means of an animation of corresponding movements of goods. Authorized visitors (from now on to be identified as "users"), can log into the application from a web-based client station from any location around the globe. Each user is assigned a nametag and is visually coded, usually in terms of a virtual representation of a human being. A user is able to: (1) observe the virtual environment and can interactively navigate through it, (2) can observe the other users that have logged into the application, (3) can dynamically interact and exchange information with other users on the basis of web-based transfer of text, data, voice and video, (4) is able to issue commands to the virtual objects for analysis and retrieval of information concerning the object.

The interactive navigation capabilities through the virtual reality, also identified as "walkthrough", allow a user to observe its environment, from any desired direction, orientation or position, for purpose of design review, analysis or inspection. Dedicated navigation routines help a user to constrain its movements to a physically realistic space, where navigation instructions such as walking through a wall or stepping inside a technical installation are blocked. This way of limiting a user's navigation degrees of freedom creates a more realistic user interaction with the virtual environment.

The application incorporates special provisions for the arrangement of design review, analysis or inspection meetings. Multiple web-based users dynamically interact with the virtual reality at the same time, where dynamic activities of a single user are shared between the other users, including the capability to:
1. Interactively control and observe the dynamic activities of oneself,
2. Observe the dynamic activities of other users,
3. Follow another user during its navigation through the facility,
4. Jump to the location of another user,
5. Lock into the view of another user,
6. Access, monitor and obtain information generated by another user.

Exchange of information between the users is provided on the basis of web-based transfer of text, data, voice and video. The virtual reality application incorporates a number of dedicated support means for management of web- meetings. They incorporate:
1.A user is provided with an up-to-date overview of the other users that are logged into the application and can set its own authorization rules for interaction and information exchange with each other user individually.
2. A user can manage its appointments by identifying when and where to meet in virtual space,
3. A user can make a reservation for a virtual meeting room and identify the individual meeting participants. Only these participants will be able to access the meeting room. Information exchange is constrained to these users only, i.e. any other visitor will be exempt.

The virtual reality incorporates a database or, alternatively, an access interface to (heterogeneous) database(s) in which relevant information concerning the objects in the virtual space are stored. E.g. a virtual representation of a manufacturing tool, facility system or logistic system, may be used as an access interface to one or more databases comprising management information, technical data & drawings, user or installation manuals, service records, photo material, etc, regarding that object. A user can inspect the database(s) from its own web-based location by navigating to an appropriate virtual object and issuing a query for retrieval of the required information. In other words, the virtual object is used as an intuitive visual access interface to information concerning the objects. Queries and their results can be shared between multiple users, allowing the information to become part of the broader interaction and information exchange between those users.

The software design of the application is based on a client-server architecture, deploying a web-based interface between client and server. The server part of the software application manages the digital model, provides a dedicated number of navigation, inspection and analysis functions, incorporates a database or provides an access channel to database information and incorporates an interface for the web-based client software. The client part of the application provides the user with display, inspection, analysis, reporting and manipulation capabilities, deploying a graphical direct-manipulation interface.

The client-server software architecture is designed to make efficient use of internet traffic, maximize utilization of server capability and optimizing the refresh rate of the VR representation at the client interface, in order to provide a near real-time interaction of the user with the virtual reality.

Additional features of the application are:
1. A user can consult a topological layout of the facility that contains the current location of all users. It can use the topology to identify the location it wants to go to, providing an efficient navigation aid.
2. Users can be assigned an authorization level to blocks their entrance to certain restricted areas in the location of their visit. This will constrain users with limited authorization to access classified information.
3. The user can document the details of the design by generating 3-D views from any direction, orientation or position. Capabilities include generation of cross-sections and projection floor plans.

### Third field: training and maintenance

This field of the invention comprises an application in which a virtual reality software model is used to train and support service personnel in a variety of tasks related to installation and maintenance of technical systems. These systems, such as advanced production equipment or facility systems, can be highly complex technological configurations and may comprise a large number of sub-assemblies, components and interfaces. Their installation and maintenance requires the execution of a diversity of critical activities that need to be executed under appropriate conditions, with highest precision and in correct sequence, as to avoid damage. The proposed innovation describes a new way of training and supporting operating and service personnel in the execution of their tasks, allowing the service personnel to use a virtual reality application to engage in:
1. Training: the virtual execution of a sequence of installation or maintenance events, while analyzing them for correctness,
2. Maintenance: a virtual execution of a sequence of events, used as an on-line interactive reference to the real execution of those tasks.

The application incorporates a highly detailed virtual reality representation of the system, where the user is able to engage in a dynamic interaction with the individual virtual components "as if" it were a reality.

The operator and service personnel (from now on identified as "users") can log into the application from any web-based client station, allowing them to execute a training or maintenance assignment from any web-based location around the globe. A photo-realistic virtual reality model of the system is created, comprising the operating environment, the system including sub-assemblies, components and technical interfaces to a high degree of detail. The user can familiarize itself with the system by freely navigating in and around the virtual reality model, allowing it to analyze the configuration and inspect location & mounting of each sub-assembly or component. A direct-manipulation interface allows the user to identify, select, navigate and manipulate all objects comprising the model, providing for the possibility to execute activities as a life-like simulation of an actual interaction with the system.

Dedicated training or maintenance objectives are addressed by the development of special operating protocols for each distinguishable case. Examples are: (1) Assembly & Installation: initial assembly and installation of the systems, (2) Qualification & Certification: the required activities for qualification, certification or hand-over of a system, (3) Maintenance & Diagnosis: the execution of a maintenance or dedicated diagnostics routine for tracing a system fault, including repair activities for a specific system fault.

By selecting a specific protocol, a dedicated training or maintenance environment is created comprising of: a visualization of the physical environment the user has to consider, a virtual model of the system, broken down to an appropriate level of detail in terms of sub-assemblies & components, the installation tools and technical aids the user can deploy for execution of its activities, and an overview of the protocol the user is expected to execute, defined in terms of the individual interventions that user is required to execute.

The user performs its tasks by navigating & interacting with the virtual environment, selecting and manipulating objects, thereby mimicking the sequence of activities required for the "real" execution of the assignment. As a guidance or learning example a user may request the application to execute a sequence of interventions automatically and ask for assistance by means of help or navigation functions that clarify the next required intervention.

During a training session, deviations from the training protocol can be detected and classified, allowing the training system to warn, block, intervene, provide additional context information, or give a dry-run example of a sequence of events as guidance to the user in the execution of its tasks.

As part of the training session balanced scorecards are maintained, identifying the extent in which a trainee has executed the correct sequence of events, has selected the correct installation aids, or has taken the correct provisions for successful and safe execution of its task. Authorized training supervisors can join the training or access the scorecards from any web-based location around the globe for evaluation purposes. All training activities can be logged, allowing a re-run of the trainee's activities, e.g. to evaluate their activities or monitor progress together with a supervisor.

Several assistant tools, incorporating navigation and instruction aids, support the user in its activities:
- Display of flags that label or identify objects such as sub-assemblies or components,
- Display of flags that label or identify interface location & type,
- Inspection of further technical details by querying an object,
- Auto-navigation as a means to automatically locate to a desired object,
- Auto-zoom as a means to automatically display the object in the desired perspective, dimensions or view angle,
- Auto-pilot as a means to automatically execute an activity or sequence of activities.

The application provides the possibility to synchronize and exchange information between multiple web-based users. This capability allows other users to remotely monitor a training session and act as supervisor or trainee. Control of the application can be switched between trainer and trainee. This capability provides for the possibility to set up a supervisor environment. By synchronizing a larger number of users, a virtual classroom is obtained. The exchange of information between these multiple users is supported with the aid of web-based capabilities for exchange of text, data, voice and video.

The software design of the application is based on a client-server architecture, deploying a web-based interface between client and server. The server part of the software application manages the digital model of the tool, provides a dedicated library of training functions & modules and incorporates an interface for web-based client software. The client part of the application provides the user with a display, inspection, analysis, reporting and manipulation capabilities, deploying a graphical direct-manipulation interface. Essential to the application is that multiple users can simultaneously access the training environment from different web based locations and that multiple users can be synchronized to share a single training session.

The client-server software architecture is designed to make efficient use of internet traffic, maximize utilization of server capability and optimizing the refresh rate of the VR representation at the client interface, in order to provide a near real-time interaction of the user with the virtual reality.

Additional features of the application are:
1. Authorized users can log into the application from a web-based client station, where is distinguishing between users and supervisors. Supervisors have the authority to monitor users and inspect training logs & scorecards.
2. A protocol can be run in auto-execution mode allowing a user to view an entire training session as a training, evaluation or support means.
3. Each object in the virtual reality model can act as an access interface for further technical data concerning the object, allowing the user to access further type specifications and technical documentation, or clarify its function.
4. Context sensitive help or aid functions can be manually or automatically activated, providing the user with hints, additional data or a complete dry run example of an event or sequence of events.
5. The precise status and context of the training session can be saved and restored, allowing a user to interrupt a training sessions and continue from its latest point in a later stage.

### Fourth field: hook-up

This field of the invention comprises a software application that is used for the design of the utility (inter) connections for equipment and technical installations
- a process usually identified as "hook-up". The proposed field of invention describes a new way of hook-up design, based on a photo-realistic virtual reality model, creating an environment in which a designer is able to dynamically interact with the objects in the 3D space, mimicking the process "as if" it is taking place in reality. A direct-manipulation interface, together with a number of interactive and automated design aids, provides a hook-up designer (from now on identified as the "user") with an efficient environment for analysis and design of the utility interconnections.

Hook-up addresses the design and documentation of system interconnections. It requires a level of detail that will allow an installation contractor to execute the corresponding installation works. Hook-up can become a very complicated operation, especially when large numbers of systems are involved. The fact that each individual system may be connected to a large diversity of other systems, results in a highly complex interwoven interconnection network. The virtual reality can be seen as an excellent means for managing this complexity, as a user can analyze this network in 3D space, allowing it to interactively inspect the set-up from any direction, orientation or position.

Hook-up is characterized by the interplay between the following groups of systems:
1. The architectural systems, consisting of buildings, rooms, support structures, concrete & steel constructs, pipe-racks, bridges & tunnels, etc. Together they represent the total building environment within which hook-up has to take place.
2. Facilities for utility generation or supply, such as systems for water, bulk & specialty gases, bulk & specialty chemicals, vacuum systems, power supply, etc.,
3. Facilities for management of affluent & exhaust streams, such as systems for discharge, treatment, abatement or neutralization of waste streams, etc.,
4. The manufacturing tools, which may be highly complex technology systems, incorporating both local and remote components, containing a large variety of utility interconnects,
5. The utility distribution system, which is a complex network of interconnecting piping and cabling, incorporating a large number of appendages such as valves, switches, transducers, regulators, manifold boxes, etc.

The proposed innovation is based on a photo-realistic virtual reality model that represents the manufacturing facility, including all of its systems and associated distribution networks. Authorized users can log into the application from a web-based client station and are able to navigate through the virtual reality, providing an interactive means for design, inspection and analysis. The user can interactively define routing of distribution piping or cabling, location of connection points, distribution panels, etc., and define the attributes of each of these interface components, either manually or by selection from a catalogue of predefined building-blocks. Design of the interconnects between individual systems takes place in several ways:
1. Manual set-up: manual identification of source and destination point and manual routing of the (inter)connection through direct manipulation (drag & drop) interaction in preassigned space,
2. Semi manual set-up: manual identification of source and destination point and automatic routing of the (inter)connection computed on the basis of a predefined AI rule set,
3. Semi automatic set-up: automatic selection of all source and destination points, with any combination of the above for the definition or the routing,
4. Automatic set-up: both the source and a destination points, as well as the routing are determined automatically

It should be noted that an automated design configuration can always be manually updated. Collision detection between interconnections and other systems provides the user with run-time feedback on non-viable design choices.

The application incorporates an artificial intelligence (AI) rule-base for optimization and automation of design activities, where rules apply for location & routing of interconnections, the selection of appropriate components, the configuration of connections & take-offs, and incorporates the following elements:
1. A space management model that allocates each connection to a fixed area or zone,
2. Models standardizing layout and configuration of pipe-racks, shafts and penetrations,
3. Default configurations for connection points, take-off points, distribution panels, racks, manifold boxes, etc.
4. Design rules identifying material choices, pipe diameters, appendage types, etc.
5. Design rules identifying of maximum/minimum allowable sizes, distances, and bends.
6. Priority rules for management of space conflicts, e.g. exhaust channels may have priority over gas connections, etc.
7. Nearest neighbor rules identifying which system connection should make use of which take-off point, distribution panel, rack or manifold box in the facilities.

The client-server software architecture is designed to make efficient use of internet traffic, maximize utilization of server capability and optimizing the refresh rate of the VR representation at the client interface, in order to provide a near real-time interaction of the user with the virtual reality.

Additional features of the application are:
1. The virtual reality model of each individual system incorporates "snap points", representing the available connection in terms of locations and type.
2. A hook-up set-up can be run-time checked for:
   - Compliance to the design rules, allowing violations to be detected and automatically or manually corrected,
   - Internal inconsistency, e.g. for a wrong utility being connected to an inappropriate system interface.
3. If a system is repositioned within its architectural environment, the attached utility distribution infrastructure will maintain its connections to that system, adapting its routing in such a way that the design rules are optimally maintained. The design configuration can be manually adapted to resolve rule conflicts.
4. The hook-up design can be dynamically visualized from any direction, orientation or position. Virtual walkthrough capabilities provide the user with dedicated analysis tools. It is possible to identify a "route", such as to automatically follow a utility connection.
5. Each object in virtual space can act as an access interface for further technical information about the object.
6. Several assistant tools support the user in its activities:
   - Display of flags that label or identify interconnecting piping & cabling,
   - Display of flags that label or identify systems,
   - Display of flags that label or identify interface locations on a system,
   - Auto-navigation as a means to automatically locate to a desired interface connection,
   - Auto-zoom as a means to automatically display the interface connection in the desired perspective, dimensions or view angle.
7. Measure and analysis aids allow the user to position objects and to evaluate relative and absolute positions & orientations. These incorporate grids, distance tools and geometric guides.
8. It is possible to switch off a number of objects in the virtual representations, such as a set of systems or specific distribution piping, in order to obtain a more simplified environment for visual interpretation.
9. On the basis of a given design set-up, reports can be generated, such as a bill-of-materials, basic connection schematics, or pipe routing projected in a horizontal or vertical planes.
10. 3-D views can be generated from any direction, orientation or position, allowing the user to document the detail design for use by installation workers or future reference.
11. The precise status and context of a hook-up session can be saved and restored, allowing a user to interrupt a design session and continue from its latest point in a later stage.

### Fifth field: design

This innovation comprises a software application that can be used for design development and review of manufacturing facilities, deploying a photo-realistic virtual reality representation of the individual facility building blocks. Manufacturing facility design incorporates the integration of a large variety of technology systems, such as architectural systems, production tools, logistics systems, utility supply & distribution systems, etc., where the design objectives are to optimize aesthetics, function, usability, efficiency, costs, safety and extendibility to create a state-of-the-art solution. The proposed innovation describes a new way of design development, providing the capability to dynamically verify design assumptions in virtual space by incorporating virtual reality models from a catalogue of predefined system solutions and alternatives. It provides a facility designer (from now on identified as "user"), its client and the future users of the facility the possibility to experience a design proposal "as-if" it has been built, creating an interactive virtual environment for review and early feedback, including the opportunity to analyze and compare different alternatives. The initial phases of facility design are mainly driven by operational and functional requirements. Once the user requirements have been established (e.g. for a manufacturing facility these comprise requirements for product type, mix, specifications, capacity, etc.), it becomes possible to identify user functions and requirements for the technology systems involved. All of these have to be accommodated into the facility and must be mutually integrated, requiring an interplay between the following key entities:
1. The architectural systems consisting of site, buildings, areas or rooms in which user functions or technology systems have to be accommodated,
2. The manufacturing tools, incorporating both local and remote components which have to be accommodated in the designated production areas and which require an appropriate management of their mutual interdependencies,
3. The logistics systems which provide for automated or manual transport and storage of semi-finished products and consumables between different manufacturing stations,
4. The facility systems for generation, supply and storage of utilities (e.g. water systems, process gases & chemicals, power systems, etc.) and for affluent discharge (abatement & neutralization systems, exhaust systems, etc.).
5. The distribution systems, comprising a complex network of piping and cabling, interconnecting all producing and consuming entities.

In the early development stages of a facility design, choices for each of the abovementioned systems have to be made largely independent of the specific technological solutions that an individual vendor or supplier may offer. Only after a specific vendor has been identified, it will become possible to validate the design integration for that specific vendor solution.

The proposed innovation comprises a web-based virtual reality application that allows a design team to evaluate a number of design alternatives and interactively inspect those in 3D space. It is based on the following framework:
1. Pre-development of a catalogue of potential vendor or supplier solutions, comprising virtual reality models of all technology systems that may be used. Each system is broken down to an appropriate level of detail in terms of sub-assemblies and components. This catalogue of virtual reality components is placed on a web-accessible server for future reference by a user and is maintained to incorporate the latest developments of the vendors and suppliers.
2. A photo-realistic virtual reality model of the architectural systems of the manufacturing facility is developed, incorporating site, buildings, areas & rooms, key concrete & steel constructs, bridges & tunnels, etc. Depending on the user requirements, the model may or may not already contain production tools.

A user can log into the application that manages the virtual reality of the manufacturing facility from a web-based client station and can navigate through virtual space, inspecting and analyzing all objects within the virtual facility from any position and orientation. The user is able to select from the catalogue of pre-defined technology system solutions and options, allowing each system configuration to be integrated into the virtual reality model of the facility by simple copy (e.g. drag & drop) operations.

A direct-manipulation interface, together with a number of dedicated design aids, provides the user with further means for interactive modification and optimization of the resulting design. The user can modify the layout of each system by repositioning or rearranging the configurations as a means to analyze the potential consequences of these modifications for the integrated design. Similarly, it can identify and rearrange routing of the utility distribution piping and other system interconnects.

The application incorporates special provisions to share and exchange information between multiple web-based users, e.g. for arrangement of design review, analysis or inspection meetings. By synchronizing the users, a design evaluation web meeting can be arranged, providing the capability for other users to join the design development in their role as peer, client, user or consultant. This incorporates the capability to:
1. Follow another user during its walkthrough,
2. Jump to the location of another user,
3. Lock into the view of another user,
4. Access, monitor and obtain information generated by another user.

Exchange of information between the users is provided on the basis of web-based transfer of text, data, voice and video.

Although the current innovation is described as a means to evaluate designs for manufacturing facilities, is not constrained to this specific area of application as it can be deployed to any facility design in which the management of a larger degree of design complexity is required, in which technology systems need to be integrated and where options and alternatives need to be evaluated.

The software design of the application deploys a client-server architecture, deploying a web-based interface between client and server. The server part of the software application manages the digital models, provides access to the catalogue of predefined virtual reality models of predefined technology systems, contains a library of dedicated design evaluation functions and contains the interface for the web-based client software. The client part of the application provides the user with display, inspection, analysis, reporting and manipulation capabilities, deploying a graphical direct-manipulation interface.

The client-server software architecture is designed to make efficient use of internet traffic, maximize utilization of server capability and optimizing the refresh rate of the VR representation at the client interface, in order to provide a near real-time interaction of the user with the virtual reality.

Additional features of the application are:
1. Authorized users can log into the application from a web-based client station, where is distinguished between designers and non-designers such as a client, user or consultant. Only designers have the authority to modify a design set-up, while the other users are only able to inspect & review the set-up.
2. The catalogue of system solutions and options is stored on a web-based server, allowing it to be accesses by any authorized user from any web-based location around the globe.
3. In the evaluation of a facility design, multiple alternative system configurations can be managed at the same time. Dedicated display functions support this capability such as compare window, toggle window, superimpose, etc.
4. The user can interactively identify the location and routing of the utility distribution, including location of penetrations with architectural sub-systems and preferred position of facility interfaces. Collision detection routines flag potential design conflicts.
5. A transport move-in route for a system can be identified in the virtual reality. An evaluation function is able to analyze this route for potential architectural constraints when transporting the system along this route. Points of conflict are identified to the user.
6. System components can be tagged to belong to a specific ramp-up phase. This allows independent views to be generated for each of these phases.
7. Each object in virtual space can act as an access interface for further technical information about the object.
8. Measure and analysis aids allow the user to evaluate relative and absolute positions & orientations.
9. The user can document the design set-up by generating 3-D views from any direction, orientation or position. Capabilities include generation of cross-sections and projection floor plans.
10. The precise status and context of a design session can be saved and restored, allowing a user to interrupt a design sessions and continue from its latest point in a later stage.

## Claims

1. System for access, exchange, analyses and design of information relating to industrial plants having a substantial complexity like petrochemical sites or production facilities for semiconductors, the system comprising;
- at least a set of mutually connected computers containing the information; and
- at least a client computer functioning as user station to enable the user to access the information to the information,
**characterized in that** the system is adapted to create a virtual reality for the user on the client computer representing the premisses of said industrial plant and that access to the information is obtained through objects in said virtual reality which bear a relation to the information concerned.

2. System as claimed in claim 1, **characterized in that** at least one of the set of computers is adapted to function as a server computer and that the client computer is remote from said server computer.

3. System as claimed in claim 2, **characterized in that** the client computer and the server computer are connected through the internet.

4. System as claimed in claim 1, 2 or 3, **characterized in that** the system is adapted to represent a user through the figure of a human being.

5. System as claimed in any of the preceding claims, **characterized in that** in the virtual reality representation information access points, like a library, a reception desk, are represented and the information access points give access to information of the kind which is obtainable at the information access points in real life which are represented.

6. System as claimed in claim 4, **characterized in that** the system comprises more than one client computer, that the users of each client computer are represented by the figure of a human being and that the users communicate and exchange information by transfer of data.

7. System as claimed in claim 6, **characterized in that** the system comprises means to make appointments between users.

8. System as claimed in claim 1, 2, 3 or 4, **characterized in that** the system is adapted to access a database providing information relating to an object in the industrial plant when the person in the virtual reality representation of said plant clicks on the object to access the information.

9. System as claimed in claim 7, **characterized in that** the system is adapted to provide technical information relating to said object clicked upon.

10. System as claimed in claim 8, **characterized in that** the technical information comprises technical drawings.

11. System as claimed in claim 1, 2, 3 or 4, **characterized in that** the virtual reality representation allows the user objects in said industrial plant to take apart to pieces and to reassemble to simulate maintenance and repair actions.

12. System as claimed in claim 11, **characterized in that** the system comprises reference data relating to the actions and that the system is adapted to compare the actions executed by the client with the reference data and to report about the rate of coherence between the executed actions and the actions of which the system contains reference data.

13. System as claimed in claim 1, 2, 3 or 4, **characterized in that** the system is adapted to enable a user to design and draw conduits between the objects in the industrial site wherein the conduits are represented in the virtual reality representation of the industrial plant and that the conduits can be automatically and interactively positioned.

14. System as claimed in claim 13, **characterized in that** the design module is adapted to give automatically determine a preferred routing of conduits without the need for human intervention.

15. System as claimed in claim 13 of 14, **characterized in that** the design module is adapted to automatically detect conflicts and to provide solutions therefore.

16. System as claimed in claim 1, 2, 3 or 4, **characterized in that** the system is adapted to enable the user to design the locations of the objects of the industrial plant, their interrelations and locations of conduits connected to said objects, wherein during the design procedure the designed objects are represented in the virtual reality representation.

17. System as claimed in claim 16, **characterized in that** the technical information of the objects is retrieved through databases contained in a computer of the set of computers.
